(19) Europäisches Patentamt / European Patent Office / Office européen des brevets

(11) **EP 4 468 021 A1**

(12) **DEMANDE DE BREVET EUROPEEN**

(43) Date de publication:
**27.11.2024 Bulletin 2024/48**

(21) Numéro de dépôt: **23305814.8**

(22) Date de dépôt: **23.05.2023**

(51) Classification Internationale des Brevets (IPC):
**G01S 7/02** *(2006.01)* **G01S 11/10** *(2006.01)*
**G01S 11/14** *(2006.01)*

(52) Classification Coopérative des Brevets (CPC):
**G01S 7/021; G01S 11/10; G01S 11/14**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **BULL SAS**
**78340 Les Clayes-Sous-Bois (FR)**

(72) Inventeur: **BUSI, Jean-Daniel**
**13127 Vitrolles (FR)**

(74) Mandataire: **IPAZ**
**Bâtiment Platon**
**Parc Les Algorithmes**
**91190 Saint-Aubin (FR)**

(54) **PROCÉDÉ, PROGRAMME D'ORDINATEUR ET DISPOSITIF DE CARACTÉRISATION D'UN ÉMETTEUR IMPULSIONNEL**

(57) L'invention concerne un procédé (200) de caractérisation d'un émetteur de signal impulsionnel, ledit procédé (200) comprenant les étapes suivantes :
- réception (202), par un récepteur, du signal impulsionnel émis par ledit émetteur,
-calcul (206) d'une variation de fréquence due à l'effet Doppler pour au moins deux grandeurs périodiques dans ledit signal impulsionnel reçu, et
-détermination (208-210) de la vitesse relative dudit émetteur par rapport audit récepteur, à partir desdites variations de fréquence.

Elle concerne également un programme d'ordinateur, un dispositif et un récepteur mettant en oeuvre un tel procédé.

EP 4 468 021 A1

| Étape | Description |
|---|---|
| 202 | Ecoute du signal impulsionnel |
| 204 | Calcul de valeur d'au moins deux grandeurs périodiques |
| 206 | Pour chaque grandeur périodique : calcul d'une variation de fréquence due à l'effet Doppler |
| 208 | A partir de chaque grandeur périodique : calcul d'une vitesse radiale relative de l'émetteur impulsionnel |
| 210 | Obtention d'une vitesse radiale relative pour l'émetteur impulsionnel |
| 212 | Calcul d'une vitesse radiale pour l'émetteur impulsionnel |
| 214 | Calcul d'une position pour l'émetteur impulsionnel |

200

**FIG. 2**

**Description**

La présente invention concerne un procédé de caractérisation d'un d'émetteur de signal impulsionnel, et en particulier en vue de déterminer sa vitesse radiale relative et éventuellement sa position. Elle concerne également un programme d'ordinateur, un dispositif et un récepteur de signal impulsionnel mettant en oeuvre un tel procédé.

Le domaine de l'invention est de manière générale le domaine de la caractérisation d'émetteurs de signaux impulsionnels, tels que des radars, des sonars, des émetteurs de radiocommunication, etc.

**État de la technique**

La détection d'un émetteur de signal impulsionnel, également appelé émetteur impulsionnel ou émetteur dans la suite, peut être réalisé en utilisant le principe Doppler. Chaque impulsion est obtenue par une porteuse d'une fréquence donnée. Le signal impulsionnel, et en particulier l'impulsion, émis(e) par l'émetteur est reçu par un récepteur. La fréquence de la porteuse utilisée pour générer l'impulsion est calculée par analyse du signal impulsionnel reçu. La variation dans le temps de la fréquence de la porteuse témoigne de la vitesse radiale relative entre l'émetteur et le récepteur. Ainsi, en déterminant la variation de la fréquence de la porteuse, il est possible de calculer la vitesse radiale de l'émetteur impulsionnel par rapport au récepteur. Lorsque le récepteur est fixe, alors la vitesse radiale relative correspond à la vitesse radiale de déplacement de l'émetteur.

Cette solution connue, basée sur le principe Doppler, est efficace dans la plupart des cas. Mais, il existe des situations où elle ne peut pas être utilisée avec précision. Suivant un exemple, la solution actuelle ne peut pas être utilisée sur des impulsions courtes, par exemple de type radars ou sonars : en effet, dans ce cas, la fréquence de la porteuse ne peut pas être détectée et calculée avec suffisamment de précision et ne permet donc pas de déterminer avec précision la vitesse radiale relative de l'émetteur. Suivant un autre exemple, la solution actuelle ne peut pas être utilisée sur des impulsions modulées dont la caractéristique de modulation n'est pas connue : en effet, sans connaître la caractéristique de modulation, il est difficile de déterminer la fréquence de la porteuse du signal impulsionnel, et donc sa variation dans le temps.

Un but de la présente invention est de remédier à au moins un des inconvénients de l'état de la technique.

Un autre but de l'invention est de proposer une solution de caractérisation d'un émetteur de signal impulsionnel de manière plus précise et pouvant être utilisée pour une plus grande variété de signaux impulsionnels.

**Exposé de l'invention**

L'invention propose d'atteindre au moins l'un des buts précités par un procédé de caractérisation d'un émetteur de signal impulsionnel, ledit procédé comprenant les étapes suivantes :

- réception, par un récepteur, du signal impulsionnel émis par ledit émetteur,
- calcul d'une variation de fréquence due à l'effet Doppler pour au moins deux grandeurs périodiques dudit signal impulsionnel reçu, et
- détermination de la vitesse radiale relative dudit émetteur, à partir desdites variations de fréquence.

Ainsi, de manière connue, l'invention propose de caractériser, et en particulier de déterminer la vitesse radiale de l'émetteur relativement au récepteur, en utilisant la variation de fréquence due à l'effet Doppler.

De manière innovante, l'invention propose de déterminer la variation de la fréquence due à l'effet Doppler avec au moins deux grandeurs périodiques dans le signal impulsionnel reçu par le récepteur, et de déterminer la vitesse radiale relative de l'émetteur impulsionnel en fonction desdites variations de fréquence. Ainsi, l'invention propose de ne pas se limiter à la variation de la fréquence due à l'effet Doppler pour la porteuse du signal impulsionnel. Par conséquent, l'invention permet de caractériser un émetteur impulsionnel, et en particulier de déterminer sa vitesse radiale relative, pour une plus grande variété d'émetteurs impulsionnels, comparée à la solution de l'état de la technique. Par exemple, l'invention permet de caractériser de manière précise des émetteurs impulsionnels émettant des impulsions courtes, tels que des radars ou des sonars, ce que la solution actuelle ne permet pas. Suivant un autre exemple, l'invention permet de caractériser des émetteurs impulsionnels émettant des impulsions modulées dont la caractéristique de modulation n'est pas connue.

En outre, le fait d'utiliser au moins deux grandeurs périodiques permet de s'assurer que la vitesse radiale relative peut être mesurée de manière plus précise. En effet, l'utilisation de plusieurs grandeurs permet de s'assurer que la vitesse mesurée est correcte, d'utiliser la mesure réalisée avec chacune des grandeurs périodiques pour confirmer, ou corriger, la mesure réalisée avec l'autre ou les autres grandeurs périodiques.

Dans le présent document, on entend par « impulsion courte » une impulsion dont la durée est inférieure ou égale à 1 ms.

Dans le présent document, on entend par « signal impulsionnel », un signal comprenant plusieurs impulsions, chaque impulsion pouvant également être appelée « émission ». Le signal impulsionnel peut comprendre une répétition de plusieurs motifs d'émissions, chaque motif correspondant, ou étant formé par, une séquence fixe de plusieurs impulsions.

Dans le présent document on entend par « impulsion » un changement rapide et transitoire de l'amplitude d'un signal d'une valeur de base à une valeur supérieure ou inférieure, suivi d'un retour rapide à la valeur de base. Suivant des exemples de réalisation, une impulsion peut être :

- une impulsion individuelle, tel qu'une impulsion radar ou sonar, ou
- un burst, également appelé une salve : dans ce cas, chaque burst émis est considéré et traité comme étant une impulsion, sans se soucier des données, ou des informations, contenues dans ledit burst.

De manière classique, une impulsion peut être obtenue par modification de l'amplitude d'un signal de base, appelé porteuse, d'une fréquence donnée, appelée fréquence de porteuse.

Suivant des modes de réalisation, au moins une grandeur périodique peut être la fréquence de la porteuse utilisée pour générer chaque impulsion, dans le signal impulsionnel.

Dans ce cas, la variation de fréquence due à l'effet Doppler concerne la fréquence de la porteuse utilisée pour générer les impulsions contenues dans le signal impulsionnel.

Dans le cas où le signal impulsionnel comprend des impulsions modulées, l'utilisation de cette grandeur peut nécessiter de connaître la caractéristique de modulation des impulsions.

Par ailleurs, lorsque la durée des impulsions est trop courte, par exemple inférieure à 1ms, il se peut que la variation de la fréquence de la porteuse due à l'effet Doppler ne puisse pas être mesurée de manière précise, car ladite fréquence de la porteuse peut ne pas être déterminée de manière suffisamment précise.

Suivant des modes de réalisation, au moins une grandeur périodique peut être une fréquence de répétition d'impulsions, dans le signal impulsionnel.

L'utilisation de cette grandeur est très avantageuse car elle ne dépend pas de la durée de l'impulsion, ou de la fréquence de la porteuse utilisée pour générer les impulsions, ou encore de la caractéristique de modulation des impulsions. De plus, tout signal impulsionnel comprenant une répétition d'impulsions, cette grandeur périodique existe dans tous les signaux impulsionnels.

En outre, la fréquence de répétition des impulsions est une grandeur qui est peut être mesurée de manière plus simple et plus précise de sorte qu'elle permet de réaliser une caractérisation plus précise.

Par ailleurs, la fréquence de répétition des impulsions est indépendante de la composition des impulsions, de l'information contenue dans les impulsions, de sorte qu'elle peut être mesurée avec très peu de connaissance du signal impulsionnel émis.

Suivant des modes de réalisation, au moins une grandeur périodique peut être une fréquence de répétition, dans le signal impulsionnel, de motifs d'émission, chaque motif d'émission comprenant un nombre fixe de plusieurs impulsions.

Dans ce cas, il est nécessaire que les impulsions soient émises suivant un motif d'impulsions.

Suivant des modes de réalisation, l'étape de détermination de la vitesse radiale relative peut comprendre les étapes suivantes :

- calcul d'une vitesse radiale relative, dite individuelle, de l'émetteur impulsionnel avec chacune d'au moins deux grandeurs périodiques pour lesquelles une variation de fréquence due à l'effet Doppler est calculée ; et
- fourniture de la vitesse radiale de l'émetteur en fonction des vitesses radiales relatives individuelles.

Autrement dit, une vitesse radiale relative de l'émetteur impulsionnel est déterminée avec chaque grandeur périodique considérée individuellement, en utilisant la variation de fréquence calculée pour ladite grandeur périodique. Ensuite, la vitesse radiale relative retenue pour l'émetteur impulsionnel peut être déterminée en fonction des vitesses radiales relatives calculées avec ces grandeurs.

Lorsque les vitesses radiales relatives obtenues avec toutes grandeurs périodiques sont trop différentes les unes des autres, cela peut signaler une erreur de mesure de sorte qu'il peut être préférable de ne pas utiliser ces vitesses pour obtenir la vitesse radiale relative de l'émetteur impulsionnel.

Lorsque la vitesse radiale relative obtenue avec une des grandeurs périodiques est trop différente de celles obtenues avec d'autres grandeurs périodiques, ladite vitesse peut ne pas être utilisée dans le calcul de la vitesse radiale retenue et être éliminée.

Pour au moins une grandeur périodique, la vitesse radiale relative peut être calculée en utilisant la relation suivante :

$$V_r = \Delta f \cdot c / f$$

avec $V_r$ la vitesse radiale relative de l'émetteur impulsionnel, $f$ la fréquence de la grandeur périodique, $\Delta f$ la variation de fréquence $f$ et c la célérité.

Suivant des modes de réalisation, la vitesse radiale relative de l'émetteur peut être fournie par un filtre de Kalman prenant en entrée les vitesse radiales relatives individuelles obtenues avec les grandeurs périodiques.

L'utilisation d'un filtre de Kalman permet de fournir un résultat précis à partir de mesures bruitées.

Bien entendu, la vitesse radiale retenue peut être calculée selon d'autres techniques. Suivant d'autres modes de réalisation, la vitesse radiale retenue pour l'émetteur impulsionnel peut être calculée suivant une relation mathématique prenant en entrée les vitesses radiales individuellement calculées avec les grandeurs périodiques. Suivant un exemple de réalisation, la vitesse radiale retenue pour l'émetteur impulsionnel peut être calculée comme étant une moyenne des vitesses radiales calculées individuellement avec les grandeurs périodiques.

Avantageusement, le procédé selon l'invention peut en outre comprendre une étape de détermination d'une position de l'émetteur impulsionnel en fonction de la vitesse radiale relative.

La position calculée peut être une position relative, telle que par exemple une distance entre l'émetteur impulsionnel et le récepteur.

La position calculée peut être une position géographique. Dans ce cas, le calcul de la position géographique de l'émetteur impulsionnel prend en compte la position du récepteur, qui, elle, est connue.

Suivant d'autres modes de réalisation, le procédé selon l'invention peut en outre comprendre une étape de détermination d'une vitesse radiale absolue de l'émetteur impulsionnel, à partir de la vitesse radiale relative.

Lorsque le récepteur est immobile, la vitesse radiale relative mesurée correspond à la vitesse radiale absolue de l'émetteur impulsionnel.

Lorsque le récepteur est mobile, dans ce cas, la vitesse radiale absolue de l'émetteur est calculée en fonction de la vitesse radiale relative mesurée et la vitesse radiale du récepteur.

Suivant des modes de réalisation, le signal impulsionnel peut être un signal radar émis par un radar. Dans ce cas, l'invention est mise en oeuvre pour caractériser ledit radar, et en particulier pour déterminer sa vitesse radiale, et optionnellement sa position.

Suivant des modes de réalisation, le signal impulsionnel peut être un signal sonar émis par un sonar. Dans ce cas, l'invention est mise en oeuvre pour caractériser ledit sonar, et en particulier pour déterminer sa vitesse radiale, et optionnellement sa position.

Suivant des modes de réalisation, le signal impulsionnel peut être une salve, (« burst » en anglais), émise par un émetteur radiofréquence. Dans ce cas, l'invention est mise en oeuvre pour caractériser ledit d'émetteur radiofréquence, et en particulier pour déterminer sa vitesse radiale, et optionnellement sa position.

Selon un autre aspect de l'invention, il est proposé un programme d'ordinateur comprenant des instructions exécutables qui, lorsqu'elles sont exécutées par un appareil informatique, mettent en oeuvre toutes les étapes du procédé, selon l'invention.

Le programme d'ordinateur peut être en tout langage informatique, tel que par exemple en langage machine, en C, C++, JAVA, Python, etc.

Le programme d'ordinateur peut être mémorisé sur tout type de support.

Selon un autre aspect de l'invention, il est proposé un dispositif de caractérisation d'un émetteur de signal impulsionnel, comprenant des moyens configurés pour mettre en oeuvre le procédé selon l'invention.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

Selon un autre aspect de l'invention, il est proposé un récepteur de signaux impulsionnels comprenant :

- au moins une antenne de réception, pour recevoir le signal impulsionnel émis par un émetteur impulsionnel ; et
- un dispositif selon l'invention.

Le récepteur peut être un récepteur fixe ou un récepteur embarqué sur un véhicule, et en particulier sur un aéronef.

Le récepteur peut comprendre une unique antenne, ou plusieurs antennes formant un réseau antennaire.

## Description des figures et modes de réalisation

D'autres avantages et caractéristiques apparaîtront à l'examen de la description détaillée de modes de réalisation nullement limitatifs, et des dessins annexés sur lesquels :

- la FIGURE 1 est une représentation schématique d'un exemple de réalisation non limitatif d'un signal impulsionnel pouvant être émis par un émetteur impulsionnel ;
- la FIGURE 2 est une représentation schématique d'un exemple de réalisation non limitatif d'un procédé selon l'invention ;
- la FIGURE 3 est une représentation schématique d'un exemple de réalisation non limitatif d'un dispositif selon l'invention ; et
- la FIGURE 4 est une représentation schématique d'un exemple de réalisation non limitatif d'un récepteur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

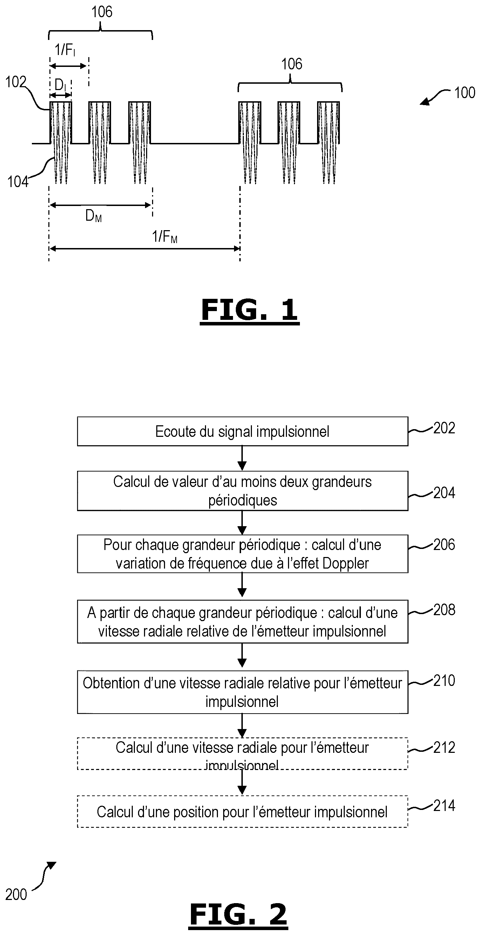

La FIGURE 1 est une représentation schématique d'un exemple de réalisation non limitatif d'un signal impulsionnel pouvant être émis par un émetteur impulsionnel.

Le signal 100 de la FIGURE 1 peut être un signal radar, un signal sonar, un signal radiofréquence.

Le signal 100 comprend une pluralité d'impulsions 102. Chaque impulsion est obtenue avec une porteuse 104 d'une fréquence donnée, notée FP, pour fréquence porteuse.

Chaque impulsion a une durée d'impulsion, notée DI.

Dans le signal impulsionnel 100, les impulsions sont répétées à une fréquence, appelée fréquence d'impulsions, et notée FI.

Dans l'exemple non limitatif représenté sur la FIGURE 1, les impulsions 102 sont des impulsions carrées. Bien entendu, l'invention n'est pas limite à cette forme d'impulsions, et les impulsions peuvent être de forme carrée, triangulaire, etc.

Dans l'exemple non limitatif représenté sur la FIGURE 1, la porteuse est un signal sinusoïdal. Bien entendu, l'invention n'est pas limite à cette forme de porteuse, et la porteuse peut être carrée, triangulaire, etc.

De manière optionnelle, le signal impulsionnel 100 peut comprendre des motifs d'émissions 106. Chaque motif 106 comprend plusieurs impulsions 102.

De préférence, tous les motifs 106 comprennent un même nombre d'impulsions. Bien entendu, au moins deux motifs peuvent comprendre un nombre différent d'impulsions.

Chaque motif 104 a une durée de motif, notée DM.

Les motifs 106 sont répétées à une fréquence de répétition, appelée fréquence de motifs, et notée FM. De préférence, tous les motifs 106 ont une même durée à l'émission. Bien entendu, au moins deux motifs peuvent avoir des durées de motif différentes.

Dans l'exemple non limitatif représenté sur la FIGURE 1, chaque motif 106 comprend trois impulsions 102. Chaque impulsion à une même durée.

Dans la présente invention, au moins deux des grandeurs périodiques listées ci-dessous peuvent être utilisées pour caractériser l'émetteur impulsionnel ayant émis le signal impulsionnel 100 :

- la fréquence FP de la porteuse : cette fréquence peut être déterminée en écoutant le signal impulsionnel 100 sur une durée suffisante, par exemple sur une durée égale à la durée de l'impulsion ;
- la fréquence FI de répétition des impulsions 102 : cette fréquence FI peut être déterminée en écoutant le signal impulsionnel 100 sur une durée suffisante, par exemple sur une durée supérieure à 2xDI ;
- la fréquence FM de répétition des motifs 106 : cette fréquence FM peut être déterminée en écoutant le signal impulsionnel 100 sur une durée suffisante, par exemple sur une durée supérieure 2*DM ;
- etc.

La FIGURE 2 est une représentation schématique d'un exemple de réalisation non limitatif d'un procédé selon la présente invention.

Le procédé 200 de la FIGURE 2 peut être utilisé pour caractériser un émetteur impulsionnel qui peut être un radar, un sonar, un émetteur radiofréquence, etc.

Le procédé 200 peut en particulier être utilisé pour caractériser un émetteur impulsionnel ayant émis le signal impulsionnel 100 de la FIGURE 1.

Le procédé 200 utilise une combinaison quelconque d'au moins deux grandeurs périodiques listées plus haut pour caractériser l'émetteur impulsionnel.

Suivant un exemple particulier, nullement limitatif, le procédé 200 utilise la fréquence de répétition d'impulsions FI et la fréquence de répétition des motifs FM. Bien étendu, il s'agit là d'un exemple non limitatif et d'autres grandeurs peuvent être utilisées à la place ou en combinaison avec la fréquence FI de répétition des impulsions 102 et/ou la fréquence FM de répétition des motifs 106.

Le procédé 200 comprend une étape 202 d'écoute du signal impulsionnel 100 par un récepteur, sur une première fenêtre temporelle. A première fenêtre temporelle est suffisamment grande, pour recueillir suffisamment de signal impulsionnel et calculer les grandeurs utilisées. Le signal impulsionnel est écouté lors de l'étape 202, jusqu'à recevoir :

- au moins deux impulsions, pour déterminer une première valeur pour la fréquence FI, notée $FI_1$ ; et
- au moins deux motifs d'émissions pour calculer une première valeur pour la fréquence FM, notée $FM_1$.

Lors d'une étape 204, les valeurs de fréquence $FI_1$ et $FM_1$ sont calculées, par exemple en utilisant les relations suivantes :

$$FI_1 = \frac{1}{\text{durée séparant deux impulsions consécutives}}$$

$$FM_1 = \frac{1}{\text{durée séparant deux motifs d'émissions}}$$

Ces valeurs peuvent optionnellement être mémorisées.

Les étapes 202-204 sont réitérées pour obtenir deux nouvelles valeurs pour les fréquences FI et FM, notées respectivement FIz et $FM_2$, pour une deuxième fenêtre temporelle.

La première et les deuxièmes fenêtres temporelles peuvent être des fenêtres temporelles glissantes de sorte que la deuxième fenêtre temporelle commence avant la fin de la première fenêtre temporelle. Alternativement, la première et les deuxièmes fenêtres temporelles peuvent ne pas se chevaucher : par exemple elles peuvent être consécutives.

La première et les deuxièmes fenêtres temporelles peuvent avoir la même durée. Alternativement, la première et les deuxièmes fenêtres temporelles peuvent avoir des durées différentes.

Lors d'une étape 206, pour chacune des grandeurs périodiques utilisées, à savoir la fréquence FI de répétition des impulsions 102 et la fréquence FM de répétition des motifs 106, une variation de fréquence due à l'effet Doppler est calculée, par exemple en utilisant les relations suivantes :

$$\Delta FI = FI_1 - FI_2$$

$$\Delta FM = FM_1 - FM_2$$

Lors d'une étape 208, une vitesse radiale de l'émetteur impulsionnel relativement au récepteur est calculée, à partir de chacune des grandeurs périodiques utilisées, à savoir la fréquence FI de répétition des impulsions 102, et la fréquence FM de répétition des motifs 106, par exemple en utilisant les relations suivantes :

$$V_r(FI) = \Delta FI . c / FI_1$$

$$V_r(FM) = \Delta FM . c / FM_1$$

Ainsi, deux vitesses radiales relatives $V_r(FI)$ et $V_r(FM)$ de l'émetteur impulsionnel sont obtenues, à partir des deux grandeurs périodiques FI et FM.

Lors d'une étape 210, une vitesse radiale relative retenue est obtenue pour l'émetteur impulsionnel, à partir de chacune des vitesses $V_r(FI)$ et $V_r(FM)$ calculées lors de l'étape 208.

Lors de cette étape 210, la vitesse radiale relative retenue pour l'émetteur impulsionnel peut être fournie par un filtre de Kalman prenant en entrée les vitesses radiales relatives obtenues lors de l'étape 208.

Alternativement, la vitesse radiale retenue pour l'émetteur impulsionnel peut être calculée suivant une relation mathématique prenant en entrée les vitesses relatives radiales $V_r(FI)$ et $V_r(FM)$ calculées à l'étape 208. Suivant un autre exemple de réalisation, la vitesse radiale retenue pour l'émetteur impulsionnel peut être calculée comme étant une moyenne des vitesses radiales $V_r(FI)$ et $V_r(FM)$ calculées à l'étape 208.

Lorsque le récepteur est fixe, la vitesse radiale relative obtenue à l'étape 210 correspond à la vitesse radiale de l'émetteur impulsionnel.

Lorsque le récepteur est mobile dans la direction radiale, alors la vitesse radiale de l'émetteur impulsionnel peut être calculée, lors d'une étape optionnelle 212, en fonction :

- de la vitesse radiale relative obtenue à l'étape 210, et
- de la vitesse radiale de l'émetteur.

Lors d'une étape optionnelle 214, la position de l'émetteur impulsionnel peut être calculée, en fonction d'une position connue précédemment et la vitesse radiale de l'émetteur impulsionnel.

La position calculée peut être une position relative, telle que par exemple une distance entre l'émetteur impulsionnel et le récepteur.

La position calculée peut être une position géographique. Dans ce cas, le calcul de la position géographique de l'émetteur impulsionnel prend en compte, au moins la position du récepteur.

Dans l'exemple décrit en référence à la FIGURE 2, seules deux grandeurs périodiques sont utilisées. Bien entendu, il est possible d'utiliser plus que deux grandeurs périodiques.

Dans l'exemple décrit en référence à la FIGURE 2, les grandeurs périodiques utilisées sont la fréquence FI de répétition des impulsions 102 et a fréquence FM de répétitions des motifs 106. Bien entendu, il est possible d'utiliser d'autres grandeurs périodiques du signal impulsionnel, à la place ou en plus d'au moins une de ces grandeurs périodiques, telle que par exemple :

- la fréquence FP de la porteuse ;
- la durée/largeur de l'impulsion DI ;
- la durée/largeur de motif DI ;
- etc.

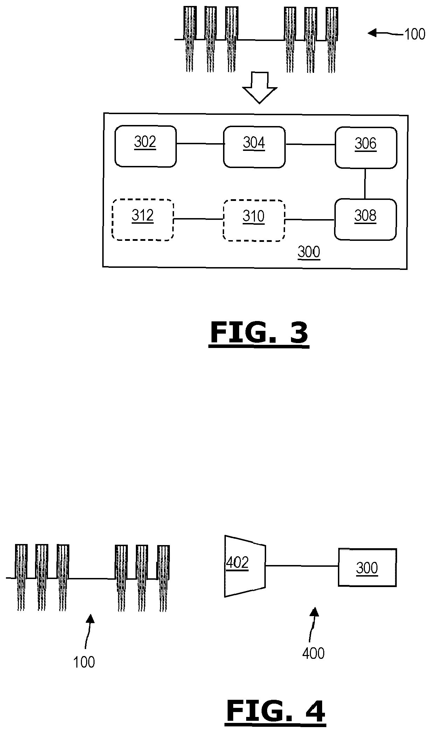

Le FIGURE 3 est une représentation schématique d'un exemple de réalisation non limitatif d'un dispositif selon la présente invention.

Le dispositif 300 de la FIGURE 3 peut être utilisé pour mettre en oeuvre un procédé selon l'invention, et en particulier le procédé 100 de la FIGURE 1.

Le dispositif 300 comprend au moins un module 302 configuré pour calculer une valeur, pour chacune d'au moins deux grandeurs périodiques d'un signal impulsionnel, pour au moins deux fenêtres temporelles d'écoute dudit signal impulsionnel. En particulier, ce module 302 peut en particulier être configuré pour mettre en oeuvre l'étape 204 décrite plus haut.

Le dispositif 300 comprend en outre un module 304 de calcul, pour chacune d'au moins deux grandeurs périodiques d'un signal impulsionnel, d'une valeur de variation de fréquence sur deux fenêtres temporelles d'écoute différentes, à partir des valeurs fournies par le module 302. Ce module 304 peut en particulier être configuré pour mettre en oeuvre l'étape 206 décrite plus haut.

Le dispositif 300 comprend en outre un module 306 de calcul, pour chacune d'au moins deux grandeurs périodiques d'un signal impulsionnel, une vitesse radiale relative de l'émetteur du signal impulsionnel, à partir des variations de fréquence calculées par le module 304. Ce module 306 peut en particulier être configuré pour mettre en oeuvre l'étape 208 décrite plus haut.

Le dispositif 300 comprend en outre un module 308 de calcul d'une vitesse radiale relative de l'émetteur du signal impulsionnel, à partir des vitesses calculées par le module 306. Ce module 306 peut par exemple, et de manière nullement limitative, être un filtre de Kalman. Ce module 308 peut en particulier être configuré pour mettre en oeuvre l'étape 210 décrite plus haut.

Le dispositif 300 peut en outre comprendre un module optionnel 310 de calcul d'une vitesse radiale de l'émetteur du signal impulsionnel, à partir de la vitesse radiale relative calculée par le module 308 et d'une vitesse radiale du récepteur. Ce module optionnel 310 peut en particulier être configuré pour mettre en oeuvre l'étape optionnelle 212 décrite plus haut.

Le dispositif 300 peut en outre comprendre un module optionnel 312 de calcul d'une position, position relative ou position géographique, de l'émetteur du signal impulsionnel. Ce module optionnel 312 peut en particulier être configuré pour mettre en oeuvre l'étape optionnelle 214 décrite plus haut.

Au moins un des modules 302-312 peut être un module matériel, tel qu'un processeur, une puce électronique, un calculateur, un ordinateur, un serveur, etc.

Au moins un des modules 302-312 peut être un module logiciel, tel qu'une application, un programme d'ordinateur, une machine virtuelle, etc.

Au moins un des modules 302-312 peut être un module individuel et indépendant des autres modules 302-312.

Au moins deux des modules 302-312 peuvent être intégrés au sein d'un même module.

Le dispositif 300 peut se présenter sous une forme matérielle, tel qu'un ordinateur, un serveur, un processeur, une puce électronique, etc.

Le dispositif 300 peut se présenter sous une forme logicielle tel qu'un programme d'ordinateur, ou une application, par exemple une application pour un appareil utilisateur de type tablette ou Smartphone.

La FIGURE 4 est une représentation schématique d'un exemple de réalisation non limitatif d'un récepteur selon la présente invention.

Le récepteur 400 comprend une antenne 402, pour recevoir un signal impulsionnel émis par un émetteur impulsionnel.

Le récepteur 400 de la FIGURE 4 comprend en outre un dispositif selon l'invention, et en particulier le dispositif 300 de la FIGURE 3, pour traiter le signal impulsionnel reçu par l'antenne 402 et caractériser l'émetteur impulsionnel ayant émis ledit signal impulsionnel reçu, et en particulier pour en déterminer la vitesse radiale relative, et optionnellement sa vitesse radiale et/ou sa position.

Alternativement, à ce qui est représenté sur la FIGURE 4, le récepteur 400 peut comprendre plusieurs antennes, ou un réseau antennaire comprenant plusieurs antennes. Dans ce cas, au moins une, en particulier chaque, antenne peut être configurée pour écouter une zone d'écoute différente d'une zone d'écoute associée à au moins une autre antenne. Alternativement, au moins deux, en particulier toutes les, antennes peuvent être configurées pour écouter une même zone d'écoute.

Bien entendu l'invention n'est pas limitée aux exemples qui viennent d'être décrits.

## Revendications

1. Procédé (200) de caractérisation d'un émetteur de signal impulsionnel, ledit procédé (200) comprenant les étapes suivantes :

   - réception (202), par un récepteur (400), du signal impulsionnel (100) émis par ledit émetteur,
   - calcul (206) d'une variation de fréquence due à l'effet Doppler pour au moins deux grandeurs périodiques dudit signal impulsionnel reçu, et
   - détermination (208-210) de la vitesse radiale relative dudit émetteur par rapport audit récepteur (400), à partir desdites variations de fréquence.

2. Procédé (200) selon la revendication précédente, **caractérisé en ce qu'**au moins une grandeur périodique est la fréquence de la porteuse utilisée pour générer chaque impulsion (102), dans le signal impulsionnel (100).

3. Procédé (200) selon l'une quelconque des revendications précédentes, **caractérisé en ce qu'**au moins une grandeur périodique est une largeur d'impulsion, dans le signal impulsionnel (100).

4. Procédé (200) selon l'une quelconque des revendications précédentes, **caractérisé en ce qu'**au moins une grandeur périodique est une fréquence de répétition d'impulsions, dans le signal impulsionnel (100).

5. Procédé (200) selon l'une quelconque des revendications précédentes, **caractérisé en ce qu'**au moins une grandeur périodique est une fréquence de répétition, dans le signal impulsionnel (100), de motifs d'émission (106), chaque motif d'émission (106) comprenant un nombre fixe de plusieurs impulsions (102).

6. Procédé (200) selon l'une quelconque des revendications précédentes, **caractérisé en ce que** l'étape de détermination de la vitesse radiale relative comprend les étapes suivantes :

   - calcul (208) d'une vitesse radiale relative, dite individuelle, de l'émetteur impulsionnel avec chacune d'au moins deux grandeurs périodiques pour lesquelles une variation de fréquence due à l'effet Doppler est calculée ; et

- fourniture (210) de la vitesse radiale de l'émetteur en fonction desdites vitesses radiale relatives individuelles.

7. Procédé (200) selon la revendication précédente, **caractérisé en ce que** la vitesse radiale relative de l'émetteur est fournie par un filtre de Kalman prenant en entrée les vitesses radiales relatives individuelles.

8. Procédé (200) selon l'une quelconque des revendications précédentes, **caractérisé en ce qu'**il comprend en outre une étape (214) de détermination d'une position de l'émetteur impulsionnel en fonction de la vitesse radiale relative.

9. Procédé (200) selon l'une quelconque des revendications précédentes, **caractérisé en ce que** le signal impulsionnel (100) est :

   - un signal radar émis par un radar,
   - un signal sonar émis par un sonar,
   - un signal radiofréquence émis par un émetteur radiofréquence.

10. Programme d'ordinateur comprenant des instructions exécutables qui, lorsqu'elles sont exécutées par un appareil informatique, mettent en en oeuvre toutes les étapes du procédé (200) selon l'une quelconque des revendications précédentes.

11. Dispositif (300) de caractérisation d'un émetteur de signal impulsionnel, comprenant des moyens (302-312) configurés pour mettre en oeuvre le procédé (200) selon l'une quelconque des revendications 1 à 9.

12. Récepteur (400) de signaux impulsionnels comprenant :

   - au moins une antenne de réception (402), pour recevoir le signal impulsionnel (100) émis par un émetteur impulsionnel ; et
   - un dispositif (300) selon la revendication précédente.

106

1/F$_I$

102

D$_I$

104

106

100

D$_M$

1/F$_M$

## FIG. 1

| | |
|---|---|
| Ecoute du signal impulsionnel | 202 |
| Calcul de valeur d'au moins deux grandeurs périodiques | 204 |
| Pour chaque grandeur périodique : calcul d'une variation de fréquence due à l'effet Doppler | 206 |
| A partir de chaque grandeur périodique : calcul d'une vitesse radiale relative de l'émetteur impulsionnel | 208 |
| Obtention d'une vitesse radiale relative pour l'émetteur impulsionnel | 210 |
| Calcul d'une vitesse radiale pour l'émetteur impulsionnel | 212 |
| Calcul d'une position pour l'émetteur impulsionnel | 214 |

200

## FIG. 2

**FIG. 3**

**FIG. 4**

**Europäisches Patentamt**
**European Patent Office**
**Office européen des brevets**

# RAPPORT DE RECHERCHE EUROPEENNE

Numéro de la demande

**EP 23 30 5814**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 610 609 A (ROSE CONRAD M [US]) 11 mars 1997 (1997-03-11) * abrégé * * colonne 1, ligne 7 – ligne 10 * * colonne 2, ligne 5 – ligne 6 * * colonne 2, ligne 27 – ligne 33 * * colonne 2, ligne 59 – ligne 63 * * revendication 1 * ----- | 1-12 | INV. G01S7/02 G01S11/10 G01S11/14 |
| A | US 2019/164442 A1 (JUST TIMOTHY [US]) 30 mai 2019 (2019-05-30) * abrégé * * alinéa [0063] * ----- | 1-12 | |

**DOMAINES TECHNIQUES RECHERCHES (IPC)**

**G01S**

Le présent rapport a été établi pour toutes les revendications

| Lieu de la recherche | Date d'achèvement de la recherche | Examinateur |
|---|---|---|
| **Munich** | **19 octobre 2023** | **Alberga, Vito** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 30 5814

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-10-2023

| Document brevet cité au rapport de recherche | | Date de publication | Membre(s) de la famille de brevet(s) | | Date de publication |
|---|---|---|---|---|---|
| US 5610609 | A | 11-03-1997 | AUCUN | | |
| US 2019164442 | A1 | 30-05-2019 | US | 2019164442 A1 | 30-05-2019 |
| | | | US | 2020265728 A1 | 20-08-2020 |
| | | | US | 2021383707 A1 | 09-12-2021 |
| | | | US | 2023196926 A1 | 22-06-2023 |

EPO FORM P0460

Pour tout renseignement concernant cette annexe : voir Journal Officiel de l'Office européen des brevets, No.12/82